# EUROPEAN PATENT SPECIFICATION

(11) **EP 4 306 179 B1**
(45) Date of publication and mention of the grant of the patent: **07.05.2025**
(21) Application number: 23166069.7
(22) Date of filing: 31.03.2023
(51) Int. Cl.: A62C 3/08, A62C 2/06, C09K 21/14, F02C 7/25, F16J 15/06, E04B 1/94

(54) **FIRE SEALS FOR HIGH TEMPERATURE AND EXTREME ENVIRONMENTS**
FEUERSCHUTZDICHTUNG FÜR HOCHTEMPERATUR- UND EXTREMUMGEBUNGEN
JOINTS COUPE-FEU POUR ENVIRONNEMENTS À HAUTE TEMPÉRATURE ET EXTRÊMES

(30) Priority: 13.07.2022 US 202217812240
(43) Date of publication of application: 17.01.2024
(73) Proprietor: The Boeing Company, Arlington, VA 22202 (US)
(72) Inventor: PRAKASH, Om, Arlington, 22202 (US)
(74) Representative: Boult Wade Tennant LLP

(56) References cited:
- EP-A1- 2 946 925
- EP-A1- 3 659 796
- WO-A1-2017/161120

## Description

### BACKGROUND

Fire-seals and high temperature seals are subject to harsh operating conditions and thus require material properties relating to high temperature exposure, ignition, burn-through, hold-pressure, stability against variety of fluids, etc. With advancement in engines that operate at higher temperatures, greater functional performance is expected of sealing materials. Many current materials used for fire seals are expensive and are not capable of long-term exposure to harsh operating environments.

Accordingly, those skilled in the art continue with research and development efforts in the field of fire seals.

WO2017161120A1, in accordance with its Abstract, states compositions of injection molded articles, multilayer extruded articles, and 3D printed articles with improved flame properties and with improved melt dripping properties are disclosed. Improved flame resistant articles may be beneficial for a large number of injection molded parts, 3D printed parts, and extruded parts. Reduced melt dripping also may be beneficial for such applications. Methods for using compositions, printed parts, molded parts, and extruded parts are disclosed.

EP2946925A1, in accordance with its Abstract, states a rigid electrical panel and a method of manufacturing a rigid electrical panel is provided with a fire protection layer on at least one side. The fire protection layer comprises fibres and an intumescent material. The rigid electrical panel comprises electrical conductors embedded in a rigid organic matrix composite. In the event of a fire, the fire protection layer protects the embedded electrical conductors, and any other features or components carried by the electrical panel.

EP3659796A1, in accordance with its Abstract, states fire-retardant composites, methods of making fire-retardant composites, and use thereof are described. A fire-retardant composite can include at least two fire-retardant laminates, and a porous thermoplastic core material disposed between the at least two fire-retardant laminates. Each laminate can have one or more ply, each of the plies can include a plurality of fibers in a thermoplastic polymer matrix that includes a fire-retardant composition. The fire-retardant composite meets European fire-retardant standards for rail transportation.

### SUMMARY

Disclosed are fire seals comprising: a bulk material that decomposes at a decomposition temperature (T_{D}); and a phase-changing material (120) having a phase transition temperature (T_{T}) and that is supported by the bulk material (110), and wherein: the bulk material (110) is fire resistant; and the phase-changing material (120) comprises particles having an average particle size of less than 1µm.

In other examples, the disclosed fire seal includes a bulk material having a decomposition temperature. The bulk material is fire resistant. The fire seal further includes a phase-changing material supported by the bulk material, the phase-changing material having a phase transition temperature. The fire seal further includes a second phase-changing material supported by the bulk material, the second phase-changing material having a second phase transition temperature. A difference between the phase transition temperature and the second phase transition temperature is at least 50 °C. A difference between the decomposition temperature and the phase transition temperature is at least 10 °C. Further, a difference between the decomposition temperature and the second phase transition temperature is at least 10°C.

Also disclosed are multi-member assemblies.

In some examples, the disclosed multi-member assembly includes a first structural member, a second structural member opposed from the first structural member, and a fire seal positioned between the first structural member and the second structural member, the fire seal includes a bulk material and a phase-changing material supported by the bulk material. The bulk material is fire resistant.

Also disclosed are fire-sealing methods.

In some examples, the disclosed fire-sealing method includes positioning a fire seal between a first structural member and a second structural member. The fire seal includes a bulk material and a phase-changing material supported by the bulk material. The bulk material is fire resistant.

Other examples of the disclosed fire seals and associated multi-member assemblies and fire-sealing methods will become apparent from the following detailed description, the accompanying drawings, and the appended claims.

### BRIEF DESCRIPTION OF THE DRAWINGS

FIG. 1 is a cross-sectional schematic of a multi-member assembly;
FIG. 2 is a cross-sectional schematic of a fire seal of the multi-member assembly of FIG. 1;
FIG. 3 is a flow diagram of an aircraft manufacturing and service methodology; and
FIG. 4 is a schematic illustration of an aircraft.

### DETAILED DESCRIPTION

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

References throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

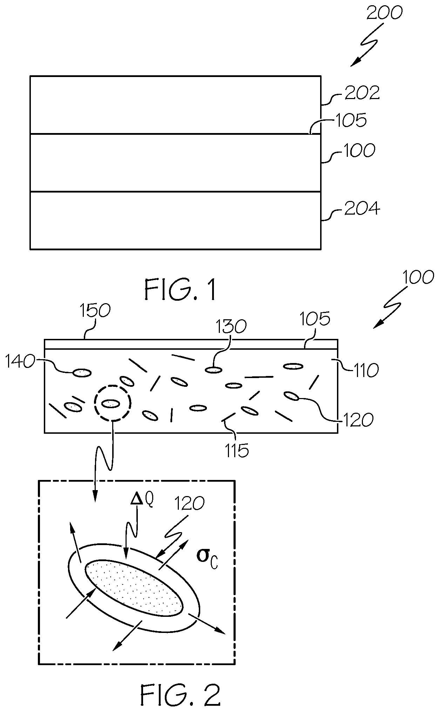

Referring to FIG. 1 and FIG. 2, disclosed is a fire seal 100. The fire seal 100 may be used in a vehicle, such as an aerospace component. The fire seal 100 assists in absorbing and dispersing heat within a multi-member assembly 200. The material properties of the fire seal 100 are selectively controlled by the chemistry of the fire seal 100. Factors include size, distribution, and fraction of inclusions and additives in the fire seal 100 as shown and described herein. The materials of the fire seal 100 are selected for high temperature and harsh environments, ignition, burn-through, hold-pressure, stability against variety of typical fluids, tolerance to thermal experience, and other requirements.

Referring to FIG. 2, the fire seal 100 includes a bulk material 110. The bulk material 110 is fire resistant. The bulk material 110 decomposes at a decomposition temperature T_{D}. In some examples, the decomposition temperature T_{D} is at least 400 °C. In other examples, the decomposition temperature T_{D} is at least 500 °C. In yet other examples, the decomposition temperature T_{D} is at least 600 °C.

The bulk material 110 may include any material having requisite material properties for the fire seal 100. The bulk material 110 may include a seal matrix-material. In some examples, the bulk material 110 comprises a ceramic material. In other examples, the bulk material 110 comprises a polymeric material. For example, the bulk material 110 may include aramid fibers, such as, for example, para-aramid material (e.g., KEVLAR brand fibers commercially available from DuPont) and/or a meta-aramid material (e.g., NOMEX brand fibers/sheets commercially available from DuPont). In other examples, the bulk material 110 may include ceramic oxide fibers.

Further, the bulk material 110 may include one or more of an amorphous material, a fabric material, a foam material, and a felt material. Examples of a fabric material include Nextel^{™} (AF-10, AF-10-900) (trademarks of 3M^{™}), Nomex^{®} (HT-2002, HT001) (trademarks of Dupont^{™}), Dacron^{™} (trademark of Dupont^{™}), S2, and E-glass.

Referring to FIG. 2, the fire seal 100 further includes a phase-changing material 120 supported by the bulk material 110. The phase-changing material 120 includes particles having various sizes and distribution within the fire seal 100. The phase-changing material 120 includes particles having an average particle size of less than 1 µm, such as particles having an average particle size within the range of 0.01 µm to 1 µm, or particles having an average particle size within the range of 0.1 µm to 1 µm, or particles having an average particle size within the range of 0.5 µm to 1 µm. In other examples, the phase-changing material 120 includes an inorganic material (e.g., magnesium chloride hexahydrate (MgCl₂.6H₂O)). In yet other examples, the phase-changing material 120 comprises a metallic material, such as a binary alloy (e.g., Al-Si, which phase changes at 578 °C (or about 578 °C), or Al-Sn, which phase changes at 230 °C (or about 230 °C)) or a ternary alloy (e.g., Cu-Al-Si, which phase changes at 850 °C (or about 850 °C)). Further, in one or more examples, the phase-changing material 120 may include a paraffin material.

The phase-changing material 120 absorbs heat within the fire seal 100 to reduce and slow material degradation when subjected to high temperatures for long periods of time and at high pressures. Referring to FIG. 2, heat input ΔQ into the phase-changing material 120 triggers latent-heat conversion, thus absorbing heat as it comes into contact with the fire seal 100. Further, expansion σ_{c} of the phase-changing material 120 due to phase change of the phase-changing material 120 triggers internal compression stress.

The phase-changing material 120 has a phase transition temperature T_{T}. In some examples, the phase transition temperature T_{T} is between 50°C and 1000°C (or approximately 50°C and approximately 1000°C). In other examples, the phase transition temperature T_{T} is between 100°C and 900°C (or approximately 100°C and approximately 900°C). In yet other examples, the phase transition temperature T_{T} is between 250°C and 800°C (or approximately 250°C and approximately 800°C).

In one or more examples, the phase-changing material 120 transitions from a solid to a liquid upon reaching the phase transition temperature T_{T}. In other examples, the phase-changing material 120 transitions from a first solid to a second solid upon reaching the phase transition temperature T_{T}. In yet other examples, the phase-changing material 120 transitions from a solid to a gas upon reaching the phase transition temperature T_{T}.

The phase transition temperature T_{T} and the decomposition temperature T_{D} of the bulk material 110 may be different. In some examples, a difference between the phase transition temperature T_{T} and the decomposition temperature T_{D} is at least 10°C. In other examples, a difference between the phase transition temperature T_{T} and the decomposition temperature T_{D} is at least 20°C. In yet other examples, a difference between the phase transition temperature T_{T} and the decomposition temperature T_{D} is at least 30°C.

The fire seal 100 may further include a second phase-changing material 130 supported by the bulk material 110. In some examples, the second phase-changing material 130 has a second phase transition temperature T_{T2}, and a difference between the second phase transition temperature T_{T2} and the decomposition temperature T_{D} is at least 10°C. Further, in one or more examples, a difference between a phase transition temperature T_{T} of the phase-changing material 120 the second phase transition temperature T_{T2} is at least 50°C. The second phase-changing material 130 may be compositionally different than the phase-changing material 120. For example, the phase-changing material 120 may be magnesium chloride hexahydrate (MgCl₂.6H₂O), which phase changes at 117°C (or about 117°C), and the second phase-changing material 130 may be tin (Sn), which phase changes at 232°C (or about 232°C).

Still referring to FIG. 2, in one or more examples, the fire seal 100 may further comprising a third phase-changing material 140 supported by the bulk material 110. The third phase-changing material 140 has a third phase transition temperature T_{T3}. In some examples, a difference between the third phase transition temperature T_{T3} and the decomposition temperature T_{D} is at least 10°C. In other examples, a difference between the third phase transition temperature T_{T3} and the decomposition temperature T_{D} is at least 20 °C. For example, the phase-changing material 120 may be magnesium chloride hexahydrate (MgCl₂.6H₂O), which phase changes at 117°C (or about 117°C), the second phase-changing material 130 may be tin (Sn), which phase changes at 232°C (or about 232°C), and the third phase-changing material 140 may be Cu-Al-Si, which phase changes at 850°C (or about 850°C).

The fire seal 100 may further include a nano-clay material 115 supported by the bulk material 110. The nano-clay material 115 may be incorporated as a single layer or multiple layers to increase the diffusion barrier. For example, a high tortuosity diffusion path in the fire seal 100 material due to the addition of nano-clay material 115 may reduce the oxygen diffusion rate. A multi-layer assembly including nano-clay material 115 may help achieve ultra-low diffusion coefficients in the fire seal 100.

In addition to nano-clay material 115, in one or more examples, the fire seal 100 may include one or more additives to promote, among other things, CO₂ evolution beyond specific temperature thresholds. Specific examples of such additives include, but art not limited to, carbonates (e.g., calcium carbonate and sodium carbonate), bicarbonates (e.g., sodium bicarbonate), glucose, citrates, and the like, and mixtures thereof.

Examples of other additives include one or more of silica, alumina, zirconia, graphene, graphene oxide, and graphite oxide supported by the bulk material 110. Referring to FIG. 2, in one or more examples, the fire seal 100 may include an infrared-reflective coating 150 on an outside surface 105 of the fire seal 100. The infrared-reflective coating 150 may include inclusions that limit heat absorption in the material. The infrared-reflective coating 150 may include, for example, infrared-reflective pigments (e.g., leafing aluminum flakes) in a binder (e.g., thermoset resin).

In some examples, a fire seal 100 includes a bulk material 110 having a decomposition temperature T_{D}. The bulk material 110 is fire resistant. The fire seal 100 further includes a phase-changing material 120 supported by the bulk material 110. The phase-changing material 120 has a phase transition temperature T_{T}.

Referring to FIG. 2, the fire seal 100 further includes a second phase-changing material 130 supported by the bulk material 110, the second phase-changing material 130 having a second phase transition temperature T_{T2}. In one or more examples, a difference between the phase transition temperature T_{T} and the second phase transition temperature T_{T2} is at least 50°C. In other examples, a difference between the decomposition temperature T_{D} and the phase transition temperature T_{T} is at least 10°C and a difference between the decomposition temperature T_{D} and the second phase transition temperature T_{T2} is at least 10°C.

In one or more examples, see FIG. 2, the fire seal 100 includes a third phase-changing material 140 supported by the bulk material 110. The third phase-changing material 140 has a third phase transition temperature T_{T3}. In some examples, a difference between the third phase transition temperature T_{T3} and the phase transition temperature T_{T} is at least 50°C and a difference between the third phase transition temperature T_{T3} and the second phase transition temperature T_{T2} is at least 50°C.

Referring to FIG. 1, disclosed is a multi-member assembly 200. The multi-member assembly 200 includes a first structural member 202 and a second structural member 204 opposed from the first structural member 202. The multi-member assembly 200 further includes a fire seal 100 positioned between the first structural member 202 and the second structural member 204.

The fire seal 100 of the multi-member assembly 200 includes a bulk material 110. The bulk material 110 is fire resistant. The fire seal 100 of the multi-member assembly 200 further includes a phase-changing material 120 supported by the bulk material 110. In some examples, the first structural member 202 of the multi-member assembly 200 is an engine and the second structural member 204 of the multi-member assembly 200 is a pylon.

Also disclosed is a fire-sealing method. The fire-sealing method includes the step of positioning a fire seal 100 between a first structural member 202 and a second structural member 204. The fire seal 100 of the fire-sealing method includes a bulk material 110 and a phase-changing material 120 supported by the bulk material 110. The bulk material 110 is fire resistant. In some examples, the first structural member 202 is an engine and wherein the second structural member 204 is a pylon.

The phase-changing material 120 reversibly triggers latent heat conversion when subjected to specific temperature levels, thereby preventing further increase in temperature. Two or more families of phase-changing material 120, 130, 140, may be incorporated so that successive latent-heat conversion events get triggered at multiple increasingly higher temperature levels. This provides for multiple levels of safety and overall graceful response of seal material in the event of excessive temperature conditions. The fire seal 100 bulk material 110 incorporates nano-clay material 115 inclusions to provide a barrier to oxygen diffusion through the material, thereby restricting self-ignition and burn-through. The fire seal 100 and constituent inclusions are coated with IR reflective material, coating 150, to limit the incident temperature rise to an extent, thereby expanding the operation envelope of the current materials. The phase-change of the phase-changing material 120 inclusions is accompanied with an associated volume change, creating internal compression stress. This helps in maintaining pressure tightness even when the harsh surrounding conditions tend to create leakage paths. The fire seal 100 material may include inclusions that generate CO₂ at the highest/extreme expected temperatures so as to extinguish any possible flame propagation through the joint.

The phase-changing material 120 and other functional additives supported by the bulk material 110 as shown and described herein are selected to enhance performance of seals, such as a fire seal 100. Specifically, phase-changing material 120 inclusions in seal matrix-material, or bulk material 110, reversibly absorb incident heat and limit temperature rise due to a latent-heat conversion process. The compressive stress induced due to associated volume change of the phase-changing material 120 provides extra benefit by ensuring tight sealing action even when rising temperature externally may lead to leakage through the fire seal 100 joint. The phase-changing material 120 may be based on solid-liquid or solid-solid phase transitions and is incorporated in sub-micron or plus-micron size along with other functional additives such as nano-clay material 115 to address the various functional requirements listed above. The composition and morphology of the phase-changing material 120 and bulk material 110 may be tailored to achieve desired performance relative to specific applications.

For example, the fire seal 100 materials may be selected such that the fire seal 100 is fireproof, does not have burn through, does not have backside ignition, is abrasion resistant, promotes self-extinguishing flames, holds pressure up to 30psi (210kPa), includes no hazardous quantity of fluid, vapor or flame can pass from one compartment to another doesn't absorb hazardous quantity of fluids survives in a nacelle/engine environment, is not susceptible to typical fluids (fuels, oils, hydraulic fluid, salt fog, deicing fluid, etc.), can withstand high and low temperatures (such as +500F and -65F (or 260°C and -54°C), is fungus resistant, is sand and dust resistant, can withstand cyclic compression/pressure, is ozone resistant, is tolerant to build tolerances, thermal expansion and contraction, and maneuver deflections, and requires low closing force: ~3-10 Ib/linear inch (50-180 kg/m). Specific polymeric systems that allow repair of damaged bonds through relatively straightforward post-treatment may also be included in the fire seal 100.

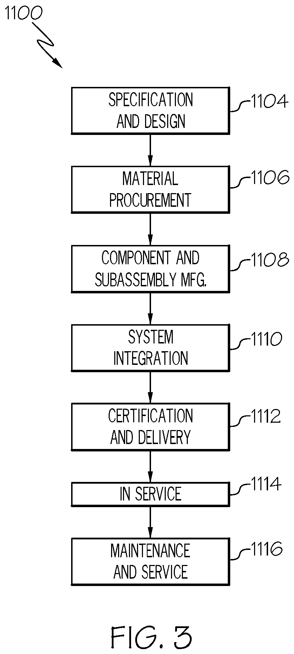

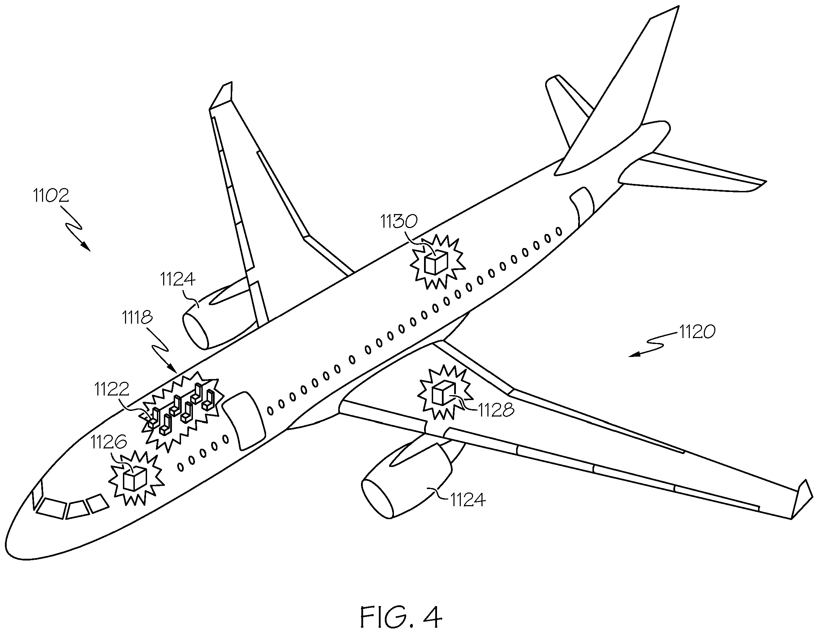

Examples of the subject matter disclosed herein may be described in the context of aircraft manufacturing and service method 1100 as shown in FIG. 3 and aircraft 1102 as shown in FIG. 4. During pre-production, service method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of service method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 4, aircraft 1102 produced by service method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

The disclosed fire seals and fire-sealing methods shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the systems, methods, or combination thereof may be utilized during production stages component and subassembly manufacturing (block 1108) and system integration (block 1110), for example, by expediting or substantially expediting assembly of or reducing the cost of aircraft 1102. Similarly, one or more examples of the systems or method realizations, or a combination thereof, may be utilized, for example and without limitation, while aircraft 1102 is in service (block 1114) and/or during maintenance and service (block 1116).

The fire seals and fire-sealing methods are described in the context of an aircraft. However, one of ordinary skill in the art will readily recognize that the disclosed fire seals and fire-sealing methods may be utilized for a variety of applications. For example, the disclosed fire seals and fire-sealing methods may be implemented in various types of vehicles including, e.g., helicopters, watercraft, passenger ships, automobiles, various material processing equipment, and the like.

## Claims

1. A fire seal (100) comprising:
a bulk material (110) that decomposes at a decomposition temperature (T_{D}); and
a phase-changing material (120) having a phase transition temperature (T_{T}) and that is supported by the bulk material (110), and
wherein:
the bulk material (110) is fire resistant; and
the phase-changing material (120) comprises particles having an average particle size of less than 1µm.

2. The fire seal (100) of Claim 1, wherein the decomposition temperature (T_{D}) is at least 400°C, at least 500°C or at least 600°C.

3. The fire seal (100) of Claim or 2, wherein the bulk material (110) comprises:
a ceramic material, a polymeric material, an aramid polymer, a meta-aramid polymer, ceramic oxide fibers, an amorphous material, a fabric material, a foam material or a felt material;
or any combination thereof.

4. The fire seal (100) of any of Claims 1 to 3, wherein the phase transition temperature (T_{T}) is between approximately 50°C and approximately 1000°C, between approximately 100°C and approximately 900°C, or between approximately 250°C and approximately 800°C.

5. The fire seal (100) of any of Claims 1 to 4, wherein the difference between the phase transition temperature (T_{T}) of the phase-changing material (120) and the decomposition temperature (T_{D}) of the bulk material (110) is at least 10°C, is at least 20°C, or is at least 30°C.

6. The fire seal (100) of any of Claims 1 to 5, wherein the phase-changing material (120):
transitions from a solid to a liquid upon reaching the phase transition temperature (T_{T});
transitions from a first solid to a second solid upon reaching the phase transition temperature (T_{T}); or
transitions from a solid to a gas upon reaching the phase transition temperature (T_{T}).

7. The fire seal (100) of any of Claims 1 to 6, wherein:
the phase-changing material (120) comprises an inorganic material, a metallic material or a paraffin material, or any combination thereof.

8. The fire seal (100) of any of Claims 1 to 7, further comprising a second phase-changing material (130) having a second phase transition temperature (T_{T2}) and that is supported by the bulk material (110).

9. The fire seal (100) of Claim 8, wherein:
the difference between the second phase transition temperature (T_{T2}) and the decomposition temperature (T_{D}) is at least 10°C, and/or
the difference between the phase transition temperature (T_{T}) of the phase-changing material (120) the second phase transition temperature (T_{T2}) is at least 50°C.

10. The fire seal (100) of Claim 8 or 9, wherein the second phase-changing material (130) is compositionally different than the phase-changing material (120).

11. The fire seal (100) of any of Claims 8 to 10, further comprising a third phase-changing material (140) having a third phase transition temperature (T_{T3}) and that is supported by the bulk material (110); and, optionally, wherein the difference between the third phase transition temperature (T_{T3}) and the decomposition temperature (T_{D}) is at least 10°C.

12. The fire seal (100) of any of Claims 1 to 11, further comprising:
a nano-clay material (115), silica, alumina, zirconia, graphene, graphene oxide, or graphite oxide, or any combination thereof, supported by the bulk material (110); and/or
an infrared-reflective coating (150) on an outside surface (105) of the fire seal (100).

13. A multi-member assembly (200) comprising:
a first structural member (202), optionally an engine;
a second structural member (204), optionally a pylon, opposed from the first structural member (202); and
the fire seal (100) of any of Claims 1 to 12 positioned between the first structural member (202) and the second structural member (204).

14. An aircraft (1102) including the multi-member assembly (200) of Claim 13.

15. A fire-sealing method comprising:
positioning the fire seal (100) of any of Claims 1 to 12 between a first structural member (202), optionally an engine, and a second structural member (204), optionally a pylon.

## Patentansprüche

1. Feuerschutzdichtung (100), umfassend:
ein Schüttgut (110), das sich bei einer Zersetzungstemperatur (T_{D}) zersetzt; und
ein Phasenwechselmaterial (120) mit einer Phasenübergangstemperatur (T_{T}), das von dem Schüttgut (110) getragen ist, und wobei:
das Schüttgut (110) feuerbeständig ist; und
das Phasenwechselmaterial (120) Partikel mit einer durchschnittlichen Partikelgröße von weniger als 1 µm umfasst.

2. Feuerschutzdichtung (100) nach Anspruch 1, bei der die Zersetzungstemperatur (T_{D}) mindestens 400 °C, mindestens 500 °C oder mindestens 600 °C beträgt.

3. Feuerschutzdichtung (100) nach Anspruch 1 oder 2, bei der das Schüttgut (110) umfasst:
ein Keramikmaterial, ein Polymermaterial, ein Aramidpolymer, ein Meta-Aramidpolymer, keramische Oxidfasern, ein amorphes Material, ein Gewebematerial, ein Schaummaterial oder ein Filzmaterial; oder eine beliebige Kombination davon.

4. Feuerschutzdichtung (100) nach einem der Ansprüche 1 bis 3, bei der die Phasenübergangstemperatur (T_{T}) zwischen etwa 50 °C und etwa 1000 °C, zwischen etwa 100 °C und etwa 900 °C oder zwischen etwa 250 °C und etwa 800 °C liegt.

5. Feuerschutzdichtung (100) nach einem der Ansprüche 1 bis 4, bei der die Differenz zwischen der Phasenübergangstemperatur (T_{T}) des Phasenwechselmaterials (120) und der Zersetzungstemperatur (T_{D}) des Schüttguts (110) mindestens 10 °C, mindestens 20 °C oder mindestens 30 °C beträgt.

6. Feuerschutzdichtung (100) nach einem der Ansprüche 1 bis 5, bei der das Phasenwechselmaterial (120):
bei Erreichen der Phasenübergangstemperatur (T_{T}) von einem festen in einen flüssigen Zustand übergeht;
bei Erreichen der Phasenübergangstemperatur (T_{T}) von einem ersten festen in einen zweiten festen Zustand übergeht; oder
bei Erreichen der Phasenübergangstemperatur (T_{T}) von einem festen in einen gasförmigen Zustand übergeht.

7. Feuerschutzdichtung (100) nach einem der Ansprüche 1 bis 6, bei der
das Phasenwechselmaterial (120) ein anorganisches Material, ein metallisches Material oder ein Paraffinmaterial oder eine beliebige Kombination davon umfasst.

8. Feuerschutzdichtung (100) nach einem der Ansprüche 1 bis 7, die ferner ein zweites Phasenwechselmaterial (130) mit einer zweiten Phasenübergangstemperatur (T_{T2}) umfasst, das von dem Schüttgut (110) getragen ist.

9. Feuerschutzdichtung (100) nach Anspruch 8, bei der:
der Unterschied zwischen der zweiten Phasenübergangstemperatur (T_{T2}) und der Zersetzungstemperatur (T_{D}) mindestens 10 °C beträgt und/oder
der Unterschied zwischen der Phasenübergangstemperatur (T_{T}) des Phasenwechselmaterials (120) und der zweiten Phasenübergangstemperatur (T_{T2}) mindestens 50 °C beträgt.

10. Feuerschutzdichtung (100) nach Anspruch 8 oder 9, bei der das zweite Phasenwechselmaterial (130) sich in seiner Zusammensetzung von dem Phasenwechselmaterial (120) unterscheidet.

11. Feuerschutzdichtung (100) nach einem der Ansprüche 8 bis 10, die ferner ein drittes Phasenwechselmaterial (140) mit einer dritten Phasenübergangstemperatur (T_{T3}) umfasst, das von dem Schüttgut (110) getragen ist; und wobei optional die Differenz zwischen der dritten Phasenübergangstemperatur (T_{T2}) und der Zersetzungstemperatur (T_{D}) mindestens 10 °C beträgt.

12. Feuerschutzdichtung (100) nach einem der Ansprüche 1 bis 11, die ferner umfasst:
ein Nanotonmaterial (115), Siliciumdioxid, Aluminiumoxid, Zirkoniumdioxid, Graphen, Graphenoxid oder Graphitoxid oder eine beliebige Kombination davon, das/die von dem Schüttgut (110) getragen ist; und/oder
eine Infrarotstrahlung reflektierende Beschichtung (150) auf einer Außenfläche (105) der Feuerschutzdichtung (100).

13. Mehrteilige Baugruppe (200), umfassend:
ein erstes Strukturelement (202), optional ein Triebwerk;
ein zweites Strukturelement (204), optional ein Pylon, das dem ersten Strukturelement (202) gegenüberliegt; und
die Feuerschutzdichtung (100) nach einem der Ansprüche 1 bis 12, die zwischen dem ersten Strukturbauteil (202) und dem zweiten Strukturbauteil (204) angeordnet ist.

14. Flugzeug (1102), das die mehrteilige Baugruppe (200) nach Anspruch 13 umfasst.

15. Feuerschutzdichtungsverfahren, umfassend:
Anbringen der Feuerschutzdichtung (100) nach einem der Ansprüche 1 bis 12 zwischen einem ersten Strukturbauteil (202), optional einem Triebwerk, und einem zweiten Strukturbauteil (204), optional einem Pylon.

## Revendications

1. Joint coupe-feu (100), comprenant :
un matériau en vrac (110) qui se décompose à une température de décomposition (T_{D}) ; et
un matériau à changement de phase (120) présentant une température de transition de phase (T_{T}) et qui est supporté par le matériau en vrac (110), et
dans lequel :
le matériau en vrac (110) est résistant au feu ; et
le matériau à changement de phase (120) comprend des particules présentant une taille de particule moyenne inférieure à 1 µm.

2. Joint coupe-feu (100) selon la revendication 1, dans lequel la température de décomposition (T_{D}) est d'au moins 400°C, d'au moins 500°C ou d'au moins 600°C.

3. Joint coupe-feu (100) selon la revendication 1 ou 2, dans lequel le matériau en vrac (110) comprend :
un matériau de céramique, un matériau polymère, un polymère d'aramide, un polymère de méta-aramide, des fibres d'oxyde de céramique, un matériau amorphe, un matériau de tissu, un matériau de mousse ou un matériau de feutre ;
ou toute combinaison de ceux-ci.

4. Joint coupe-feu (100) selon l'une quelconque des revendications 1 à 3, dans lequel la température de transition de phase (T_{T}) est comprise entre environ 50°C et environ 1 000°C, entre environ 100°C et environ 900°C, ou entre environ 250°C et environ 800°C.

5. Joint coupe-feu (100) selon l'une quelconque des revendications 1 à 4, dans lequel la différence entre la température de transition de phase (T_{T}) du matériau à changement de phase (120) et la température de décomposition (T_{D}) du matériau en vrac (110) est d'au moins 10°C, est d'au moins 20°C ou est d'au moins 30°C.

6. Joint coupe-feu (100) selon l'une quelconque des revendications 1 à 5, dans lequel le matériau à changement de phase (120) :
passe d'un solide à un liquide en atteignant la température de transition de phase (T_{T}) ;
passe d'un premier solide à un second solide en atteignant la température de transition de phase (T_{T}) ; ou
passe d'un solide à un gaz en atteignant la température de transition de phase (T_{T}).

7. Joint coupe-feu (100) selon l'une quelconque des revendications 1 à 6, dans lequel :
le matériau à changement de phase (120) comprend un matériau inorganique, un matériau métallique ou un matériau de paraffine, ou toute combinaison de ceux-ci.

8. Joint coupe-feu (100) selon l'une quelconque des revendications 1 à 7, comprenant en outre un second matériau à changement de phase (130) présentant une deuxième température de transition de phase (T_{T2}) et qui est supporté par le matériau en vrac (110).

9. Joint coupe-feu (100) selon la revendication 8, dans lequel :
la différence entre la deuxième température de transition de phase (T_{T2}) et la température de décomposition (T_{D}) est d'au moins 10°C, et/ou
la différence entre la température de transition de phase (T_{T}) du matériau à changement de phase (120) et la deuxième température de transition de phase (T_{T2}) est d'au moins 50°C.

10. Joint coupe-feu (100) selon la revendication 8 ou 9, dans lequel le second matériau à changement de phase (130) est d'une composition différente par rapport au matériau à changement de phase (120).

11. Joint coupe-feu (100) selon l'une quelconque des revendications 8 à 10, comprenant en outre un troisième matériau à changement de phase (140) présentant une troisième température de transition de phase (T_{T3}) et qui est supporté par le matériau en vrac (110) ; et facultativement dans lequel la différence entre la troisième température de transition de phase (T_{T3}) et la température de décomposition (T_{D}) est d'au moins 10°C.

12. Joint coupe-feu (100) selon l'une quelconque des revendications 1 à 11, comprenant en outre :
un matériau de nanoargile (115), de la silice, de l'alumine, de la zircone, du graphène, de l'oxyde de graphène ou de l'oxyde de graphite, ou toute combinaison de ceux-ci, supporté(e) par le matériau en vrac (110) ; et/ou
un revêtement réfléchissant les infrarouges (150) sur une surface extérieure (105) du joint coupe-feu (100).

13. Ensemble à plusieurs éléments (200), comprenant :
un premier élément structurel (202), facultativement un moteur ;
un second élément structurel (204), facultativement un pylône, opposé au premier élément structurel (202) ; et
le joint coupe-feu (100) selon l'une quelconque des revendications 1 à 12 positionné entre le premier élément structurel (202) et le second élément structurel (204).

14. Aéronef (1102) incluant l'ensemble à plusieurs éléments (200) selon la revendication 13.

15. Procédé d'étanchéité au feu, comprenant l'étape consistant à :
positionner le joint coupe-feu (100) selon l'une quelconque des revendications 1 à 12 entre un premier élément structurel (202), facultativement un moteur, et un second élément structurel (204), facultativement un pylône.
